(19) Europäisches Patentamt
European Patent Office
Office européen des brevets

(11) EP 4 450 533 A2

(12) **EUROPEAN PATENT APPLICATION**

(43) Date of publication:
**23.10.2024 Bulletin 2024/43**

(21) Application number: **24170365.1**

(22) Date of filing: **15.04.2024**

(51) International Patent Classification (IPC):
***C08G 63/06*** *(2006.01)* ***C08G 63/91*** *(2006.01)*
***C08L 67/04*** *(2006.01)*

(52) Cooperative Patent Classification (CPC):
**C08G 63/06; C08G 63/912; C08L 67/04**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **17.04.2023 TW 112114265**

(71) Applicant: **Largan Medical Co., Ltd.**
**Taichung City 408 (TW)**

(72) Inventors:
- **CHEN, Wei-Yuan**
  **408 Taichung City (TW)**
- **CHEN, Po-Tsun**
  **408 Taichung City (TW)**
- **CHEN, Rih-Sian**
  **408 Taichung City (TW)**
- **LU, Yi-Rou**
  **408 Taichung City (TW)**
- **HONG, Yu Jie**
  **408 Taichung City (TW)**
- **TENG, Chun-Hung**
  **408 Taichung City (TW)**

(74) Representative: **Lang, Christian**
**LangPatent Anwaltskanzlei IP Law Firm**
**Ingolstädter Straße 5**
**80807 München (DE)**

(54) **POLYMER, COATING MATERIAL AND ASSEMBLED PRODUCT BACKGROUND**

(57) A polymer has a degradability and includes a monomer. The monomer of the polymer includes a benzene derivative, a lactide and a caprolactone. A ratio of the benzene derivative in the polymer is smaller than a ratio of the lactide in the polymer. The ratio of the benzene derivative in the polymer is smaller than a ratio of the caprolactone in the polymer.

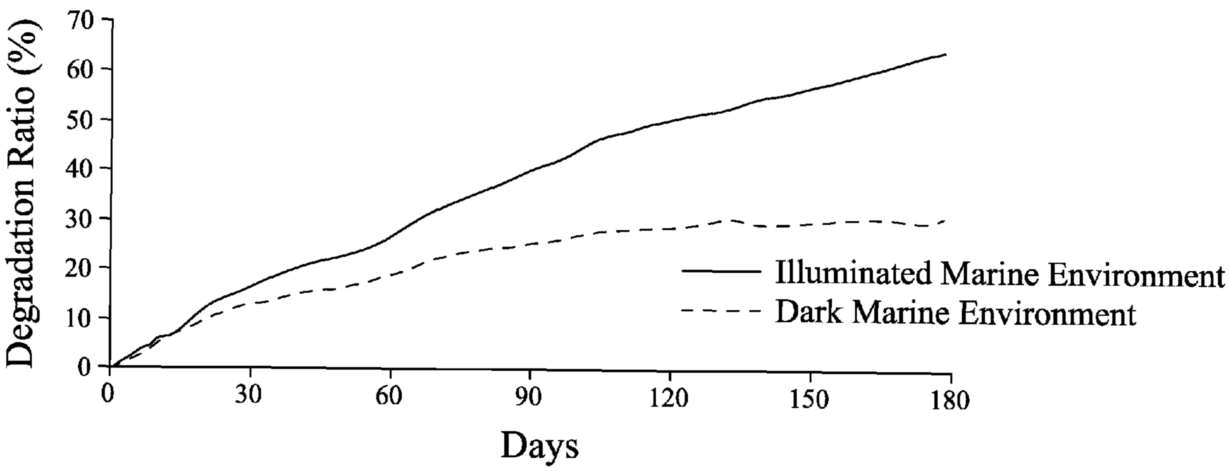


Fig. 3

EP 4 450 533 A2

## Description

## BACKGROUND

### Technical Field

The present disclosure relates to a polymer and a coating material. More particularly, the present disclosure relates to a polymer and a coating material which are applied to an assembled product and have a degradability.

### Description of Related Art

In recent years, the environmental awareness has been raising. It is encouraged to use environmentally friendly materials on products from daily necessities to electronic devices. Common environmentally friendly materials include recyclable materials, recycled materials or biodegradable materials. The damage to the ecology and the environment can be reduced by using the biodegradable materials, and the recycling cost of the biodegradable products can be saved because of the biodegradable properties thereof. Therefore, the biodegradable materials are widely used in inexpensive products which are greatly used in daily life, such as snack packages, shopping bags and disposable containers.

Although there are many products of the biodegradable materials, most of the biodegradable materials have a poor degradation ratio. The degradable effect of the biodegradable materials is limited by the environment, because the biodegradable materials are usually degraded under an environment with high temperature and high humidity. If the waste of the biodegradable materials is not properly disposed of and enters the ocean, the waste cannot be effectively degraded, which eventually destroys the marine ecosystem. Furthermore, because of the degradable characteristics of the biodegradable materials, the molecular structure thereof might be relatively unstable and easy to be degraded or involved in chemical reactions in typical environments, resulting in a reduced durability or defects before the biodegradable materials are made into products.

In this regard, it is an important goal to develop a biodegradable material which is not limited by the environment and has great durability.

## SUMMARY

According to the present disclosure, a polymer has a degradability. A monomer of the polymer includes a benzene derivative, a lactide and a caprolactone. A ratio of the benzene derivative in the polymer is smaller than a ratio of the lactide in the polymer. The ratio of the benzene derivative in the polymer is smaller than a ratio of the caprolactone in the polymer. When a degradation ratio on a 28th day of the polymer under an illuminated marine environment is Drus28, the following condition is satisfied: 13% ≤ Drus28.

According to the aforementioned polymer, the benzene derivative has a light-absorbability.

According to the aforementioned polymer, the benzene derivative comprises at least one of a hydroxyl group, a carbonyl group and an ether group.

According to the aforementioned polymer, when an average molecular weight of the polymer is Mw, the following condition is satisfied: 300 g/mole ≤ Mw.

According to the aforementioned polymer, when an average molecular weight of the polymer is Mw, the following condition is satisfied: Mw ≤ 10000 g/mole.

According to the aforementioned polymer, when a pyrolysis temperature of the polymer is Pt, the following condition is satisfied: 100°C ≤ Pt.

According to the aforementioned polymer, when a viscosity of the polymer is Vi, the following condition is satisfied: Vi ≤ 500 Pa s.

According to the aforementioned polymer, when a water solubility of the polymer is Sw, the following condition is satisfied: Sw ≤ 5.00%.

According to the aforementioned polymer, when the degradation ratio on the 28th day of the polymer under the illuminated marine environment is Drus28, and a degradation ratio on a 28th day of the polymer under a dark marine environment is Drs28, the following condition is satisfied: 1% ≤ Drus28-Drs28.

According to the aforementioned polymer, when a degradation ratio on a 178th day of the polymer under the illuminated marine environment is Drus178, and a degradation ratio on a 178th day of the polymer under the dark marine environment is Drs178, the following condition is satisfied: 5% ≤ Drus178-Drs178.

According to the aforementioned polymer, the polymer has a biodegradability, when a degradation ratio on a 28th day of the polymer under a soil environment is Dr28, the following condition is satisfied: 50% ≤ Dr28.

According to the aforementioned polymer, the polymer has a biodegradability, when a time of the polymer reaching a degradation ratio of 50% under a soil environment is TDr50p, the following condition is satisfied: TDr50p ≤

28 days.

According to the present disclosure, a coating material includes the polymer of the aforementioned aspect.

According to the present disclosure, an assembled product includes the coating material of the aforementioned aspect.

According to the present disclosure, a polymer has a degradability. A monomer of the polymer includes a benzene derivative, a lactide and a caprolactone. The benzene derivative includes at least one of a hydroxyl group, a carbonyl group and an ether group. When a wavelength of the polymer having a largest absorbance is WAmax, the following condition is satisfied: WAmax ≤ 300 nm.

According to the aforementioned polymer, the benzene derivative has a light-absorbability.

According to the aforementioned polymer, when an average molecular weight of the polymer is Mw, the following condition is satisfied: 300 g/mole ≤ Mw ≤ 10000 g/mole.

According to the aforementioned polymer, when a water solubility of the polymer is Sw, the following condition is satisfied: Sw ≤ 5.00%.

According to the aforementioned polymer, when an average transmittance of the polymer under a wavelength range of 400 nm to 700 nm is T4070, the following condition is satisfied: 70.00% ≤ T4070.

According to the aforementioned polymer, the polymer has a biodegradability, when a degradation ratio on a 28th day of the polymer under a soil environment is Dr28, the following condition is satisfied: 50% ≤ Dr28.

According to the aforementioned polymer, the polymer has a biodegradability, when a time of the polymer reaching a degradation ratio of 50% under a soil environment is TDr50p, the following condition is satisfied: TDr50p ≤ 28 days.

According to the present disclosure, a coating material includes the polymer of the aforementioned aspect.

According to the present disclosure, an assembled product includes the coating material of the aforementioned aspect.

## BRIEF DESCRIPTION OF THE DRAWINGS

The present disclosure can be more fully understood by reading the following detailed description of the embodiment, with reference made to the accompanying drawings as follows:

Fig. 1 is a relationship diagram between wavelength and absorbance of the polymers of the 1st example and the 2nd example according to the present disclosure.

Fig. 2 is a relationship diagram between wavelength and transmittance of the polymers of the 1st example and the 2nd example according to the present disclosure.

Fig. 3 is a diagram showing the change of degradation ratios of the polymer of the 1st example under an illuminated marine environment and a dark marine environment according to the present disclosure.

Fig. 4 is a diagram showing the change of degradation ratios of the polymer of the 2nd example under the illuminated marine environment and the dark marine environment according to the present disclosure.

Fig. 5 is a diagram showing the change of biodegradation ratios of the polymers of the 1 st example to the 3rd example under a soil environment according to the present disclosure.

## DETAILED DESCRIPTION

According to the present disclosure, a polymer has a degradability. A monomer of the polymer includes a benzene derivative, a lactide and a caprolactone. Therefore, the polymer of the present disclosure has a monomer including the benzene derivative, the lactide and the caprolactone, which can be made into products with degradable properties. The products made of the polymer can be degraded in the illuminated marine environment, and it is favorable for reducing the damage of waste products to the marine ecosystem.

According to the polymer of the present disclosure, a ratio of the benzene derivative in the polymer is smaller than a ratio of the lactide in the polymer, and the ratio of the benzene derivative in the polymer is smaller than a ratio of the caprolactone in the polymer. Therefore, the ratio of the benzene derivative in the polymer is adjusted to be smaller than the ratios of the lactide and the caprolactone in the polymer. The ratio of the benzene derivative in the polymer is small to make the polymer be able to be degraded in the illuminated marine environment, and it is favorable for balancing the degradation ratio and the durability of the polymer. Moreover, the ratios between the benzene derivative, the lactide and the caprolactone in the polymer can be 1:2-7:2-5, which can be 1:2:2, 1:2:3, 1:3:3, 1:4:3, 1:4:4, 1:5:4, 1:5:5, 1:6:5 or 1:7:5. However, the present disclosure is not limited to the aforementioned ratios.

According to the polymer of the present disclosure, when a degradation ratio on a 28th day of the polymer under an illuminated marine environment is Drus28, the following condition is satisfied: 13% ≤ Drus28. Therefore, the degradation effect in the illuminated marine environment of waste products made of the polymer can be improved by

satisfying the degradation ratio of the polymer in the illuminated marine environment. The residue of products made of the polymer in the ocean can be avoided, and the damage on the marine ecosystems can be further reduced. Moreover, the following condition can be satisfied: 14% ≤ Drus28. Furthermore, the following condition can be satisfied: 15% ≤ Drus28 ≤ 100%.

According to the polymer of the present disclosure, the benzene derivative includes at least one of a hydroxyl group, a carbonyl group and an ether group. Therefore, the monomer of the polymer can be designed to include the benzene derivative with the hydroxyl group, the carbonyl group and the ether group. The aforementioned functional groups can participate in the photoreaction to increase intramolecular or intermolecular bonds, which is favorable for improving the photoreaction rate of the benzene derivative.

According to the polymer of the present disclosure, when a wavelength of the polymer having a largest absorbance is WAmax, the following condition is satisfied: WAmax ≤ 300 nm. Therefore, because the atmosphere can block light with a wavelength smaller than 300 nm, the polymer can be prevented from being consumed by a chemical reaction caused by the exposure to natural light through limiting the wavelength of the polymer having the largest absorbance to less than or equal to 300 nm. It is favorable for improving the durability of the polymer. Moreover, the following condition can be satisfied: WAmax ≤ 400 nm. Moreover, the following condition can be satisfied: WAmax ≤ 350 nm. Furthermore, the following condition can be satisfied: 0 nm ≤ WAmax ≤ 270 nm.

According to the polymer of the present disclosure, the benzene derivative can have a light-absorbability. Therefore, the polymer can be designed to include the benzene derivative with light-absorbent properties to allow the polymer to generate electron transfer through light exposure, which is favorable for reducing the difficulty of the polymer performing chemical reactions.

According to the polymer of the present disclosure, when an average molecular weight of the polymer is Mw, the following condition can be satisfied: 300 g/mole ≤ Mw. Therefore, it can prevent the polymer from passing through the cell membrane by satisfying the lower limit of the average molecular weight of the polymer, which is favorable for improving the biosafety. Moreover, the following condition can be satisfied: Mw ≤ 10000 g/mole. Therefore, it can reduce the difficulty of breaking the molecular bonds by limiting the upper limit of the average molecular weight of the polymer, which is favorable for reducing the degradation difficulty of the polymer. Moreover, the following condition can be satisfied: 300 g/mole ≤ Mw ≤ 10000 g/mole. Moreover, the following condition can be satisfied: 500 g/mole ≤ Mw. Moreover, the following condition can be satisfied: 1000 g/mole ≤ Mw ≤ 10000 g/mole. Moreover, the following condition can be satisfied: 1200 g/mole ≤ Mw ≤ 8000 g/mole. Moreover, the following condition can be satisfied: 1500 g/mole ≤ Mw ≤ 6000 g/mole. Furthermore, the following condition can be satisfied: 2000 g/mole ≤ Mw ≤ 4000 g/mole.

According to the polymer of the present disclosure, when a pyrolysis temperature of the polymer is Pt, the following condition can be satisfied: 100°C ≤ Pt. Therefore, it is favorable for stabilizing the structure of the polymer under the high temperature by satisfying the pyrolysis temperature of the polymer. Moreover, the following condition can be satisfied: 120°C ≤ Pt. Moreover, the following condition can be satisfied: 150°C ≤ Pt ≤ 1000°C. Moreover, the following condition can be satisfied: 180°C ≤ Pt ≤ 800°C. Furthermore, the following condition can be satisfied: 200°C ≤ Pt ≤ 500°C.

According to the polymer of the present disclosure, when a viscosity of the polymer is Vi, the following condition can be satisfied: Vi ≤ 500 Pa s. Therefore, it ensures that the polymer has great fluidity by limiting the viscosity of the polymer, which is favorable for enhancing the convenience of using the polymer. Moreover, the following condition can be satisfied: Vi ≤ 300 Pa s. Moreover, the following condition can be satisfied: Vi ≤ 100 Pa s. Moreover, the following condition can be satisfied: Vi ≤ 50 Pa s. Furthermore, the following condition can be satisfied: 1 Pa·s ≤ Vi ≤ 30 Pa s.

According to the polymer of the present disclosure, when a water solubility of the polymer is Sw, the following condition can be satisfied: Sw ≤ 5.00%. Therefore, it prevents the polymer from failing due to moisture or water splashing by limiting the water solubility of the polymer, which is favorable for improving the water resistance of the polymer. Moreover, the following condition can be satisfied: Sw ≤ 3.00%. Moreover, the following condition can be satisfied: Sw ≤ 1.00%. Moreover, the following condition can be satisfied: 0.00% ≤ Sw ≤ 0.50%. Furthermore, the following condition can be satisfied: 0.10% ≤ Sw ≤ 0.35%.

According to the polymer of the present disclosure, when the degradation ratio on the 28th day of the polymer under the illuminated marine environment is Drus28, and a degradation ratio on a 28th day of the polymer under a dark marine environment is Drs28, the following condition can be satisfied: 1% ≤ Drus28-Drs28. Therefore, it is favorable for enhancing the synergy between the illumination and the degradation of the polymer by satisfying the difference between the degradation ratios under the illuminated marine environment and the dark marine environment. Moreover, the following condition can be satisfied: 3% ≤ Drus28-Drs28. Furthermore, the following condition can be satisfied: 5% ≤ Drus28-Drs28 ≤ 100%.

According to the polymer of the present disclosure, when a degradation ratio on a 178th day of the polymer under the illuminated marine environment is Drus178, and a degradation ratio on a 178th day of the polymer under the dark marine environment is Drs178, the following condition can be satisfied: 5% ≤ Drus178-Drs178. Therefore, it is favorable for enhancing the upper limit of the synergy between the illumination and the degradation of the polymer by

satisfying the difference between the long-term degradation ratios under the illuminated marine environment and the dark marine environment. Moreover, the following condition can be satisfied: 10% ≤ Drus178-Drs178. Moreover, the following condition can be satisfied: 15% ≤ Drus178-Drs178. Moreover, the following condition can be satisfied: 20% ≤ Drus178-Drs178. Moreover, the following condition can be satisfied: 25% ≤ Drus178-Drs178. Furthermore, the following condition can be satisfied: 30% ≤ Drus178-Drs178 ≤ 100%.

According to the polymer of the present disclosure, the polymer has a biodegradability. When a degradation ratio on a 28th day of the polymer under a soil environment is Dr28, the following condition can be satisfied: 50% ≤ Dr28. Therefore, it is favorable for enhancing the degradation effects of the polymer under the soil environment by satisfying the degradation ratio of the polymer under the soil environment. Moreover, the following condition can be satisfied: 60% ≤ Dr28. Moreover, the following condition can be satisfied: 70% ≤ Dr28. Moreover, the following condition can be satisfied: 80% ≤ Dr28. Moreover, the following condition can be satisfied: 90% ≤ Dr28. Furthermore, the following condition can be satisfied: 95% ≤ Dr28 ≤ 100%.

According to the polymer of the present disclosure, the polymer has the biodegradability. When a time of the polymer reaching a degradation ratio of 50% under the soil environment is TDr50p, the following condition can be satisfied: TDr50p ≤ 28 days. Therefore, it is favorable for enhancing the degradation efficiency of the polymer under the soil environment by satisfying the degradation time of the polymer under the soil environment. Moreover, the following condition can be satisfied: TDr50p ≤ 21 days. Moreover, the following condition can be satisfied: 0 days ≤ TDr50p ≤ 14 days. Moreover, the following condition can be satisfied: 1 day ≤ TDr50p ≤ 7 days. Furthermore, the following condition can be satisfied: 2 days ≤ TDr50p ≤ 5 days.

According to the polymer of the present disclosure, when an average transmittance of the polymer under a wavelength range of 400 nm to 700 nm is T4070, the following condition can be satisfied: 70.00% ≤ T4070. Therefore, it avoids the polymer affecting the light transmittance by satisfying the transmittance of the polymer under a wavelength of visible light, which is favorable for increasing the applications of the polymer. Moreover, the following condition can be satisfied: 80.00% ≤ T4070. Moreover, the following condition can be satisfied: 90.00% ≤ T4070. Furthermore, the following condition can be satisfied: 95.00% ≤ T4070 ≤ 100.00%.

According to the polymer of the present disclosure, when an average transmittance of the polymer under a wavelength range of 700 nm to 1000 nm is T70100, the following condition can be satisfied: 70.00% ≤ T70100. Therefore, the impact on near-infrared light transmittance due to the polymer can be prevented by satisfying the transmittance of the polymer under a wavelength of near-infrared light, which is favorable for making the polymer into the near-infrared light-related products. Moreover, the following condition can be satisfied: 80.00% ≤ T70100. Moreover, the following condition can be satisfied: 90.00% ≤ T70100. Furthermore, the following condition can be satisfied: 95.00% ≤ T70100 ≤ 100.00%.

According to the polymer of the present disclosure, when the degradation ratio on the 28th day of the polymer under the dark marine environment is Drs28, the following condition can be satisfied: 1% ≤ Drs28. Therefore, it is favorable for enhancing the degradation effects of the polymer under the dark marine environment by satisfying the degradation ratio of the polymer under the dark marine environment. Moreover, the following condition can be satisfied: 3% ≤ Drs28. Moreover, the following condition can be satisfied: 5% ≤ Drs28. Moreover, the following condition can be satisfied: 8% ≤ Drs28. Moreover, the following condition can be satisfied: 10% ≤ Drs28. Furthermore, the following condition can be satisfied: 12% ≤ Drs28 ≤ 100%.

According to the polymer of the present disclosure, when the degradation ratio on the 178th day of the polymer under the dark marine environment is Drs178, the following condition can be satisfied: 5% ≤ Drs178. Therefore, it is favorable for enhancing the long-term degradation effects of the polymer under the dark marine environment by satisfying the degradation ratio on the 178th day of the polymer under the dark marine environment. Moreover, the following condition can be satisfied: 10% ≤ Drs178. Moreover, the following condition can be satisfied: 15% ≤ Drs178. Moreover, the following condition can be satisfied: 20% ≤ Drs178. Moreover, the following condition can be satisfied: 25% ≤ Drs178. Furthermore, the following condition can be satisfied: 30% ≤ Drs178 ≤ 100%.

According to the polymer of the present disclosure, when the degradation ratio on the 178th day of the polymer under the illuminated marine environment is Drus178, the following condition can be satisfied: 30% ≤ Drus178. Therefore, it is favorable for enhancing the long-term degradation effects of the polymer under the illuminated marine environment by satisfying the degradation ratio on the 178th day of the polymer under the illuminated marine environment. Moreover, the following condition can be satisfied: 40% ≤ Drus178. Moreover, the following condition can be satisfied: 50% ≤ Drus178. Moreover, the following condition can be satisfied: 60% ≤ Drus178. Furthermore, the following condition can be satisfied: 63% ≤ Drus178 ≤ 100%.

According to the polymer of the present disclosure, when a degradation ratio on a 35th day of the polymer under the soil environment is Dr35, the following condition can be satisfied: 50% ≤ Dr35. Therefore, it is favorable for enhancing the short-term degradation effects of the polymer under the soil environment by satisfying the degradation ratio on the 35th day of the polymer under the soil environment. Moreover, the following condition can be satisfied: 60% ≤ Dr35. Moreover, the following condition can be satisfied: 70% ≤ Dr35. Moreover, the following condition can be satisfied:

80% ≤ Dr35. Moreover, the following condition can be satisfied: 90% ≤ Dr35. Furthermore, the following condition can be satisfied: 95% ≤ Dr35 ≤ 100%.

According to the polymer of the present disclosure, when a degradation ratio on a 56th day of the polymer under the soil environment is Dr56, the following condition can be satisfied: 50% ≤ Dr56. Therefore, it is favorable for enhancing the medium-term degradation effects of the polymer under the soil environment by satisfying the degradation ratio on the 56th day of the polymer under the soil environment. Moreover, the following condition can be satisfied: 60% ≤ Dr56. Moreover, the following condition can be satisfied: 70% ≤ Dr56. Moreover, the following condition can be satisfied: 80% ≤ Dr56. Moreover, the following condition can be satisfied: 90% ≤ Dr56. Furthermore, the following condition can be satisfied: 95% ≤ Dr56 ≤ 100%.

According to the polymer of the present disclosure, a catalyst can be added in the polymerization of the polymer. The catalyst can be tin(II) 2-ethylhexanoate, tin(II) chloride, tin(II) sulfate, dibutyltin oxide or dibutyltin dilaurate.

According to the polymer of the present disclosure, having the light-absorbability means the monomer can include or maintain the properties of light absorbent in the polymer. The monomer having the light-absorbability can induce chemical reactions after the polymer receiving light. The intramolecular or intermolecular bonding strength or bonding way can be changed, or the molecular type thereof can be changed. Light absorbents are compounds or substances that induce chemical reactions when exposed to light, and the chemical reactions induced by light are known as photoreactions. The types of light that induce photoreactions can be ultraviolet light or visible light. In the present disclosure, the monomer having the light-absorbability of the polymer can be an ultraviolet-light-absorbing monomer which absorbs ultraviolet light, a visible-light-absorbing monomer which absorbs visible light and a blue-light-absorbing monomer which absorbs blue light. The benzene derivative can be 2-hydroxy-4'-(2-hydroxyethoxy)-2-methylpropiophenone (IRGACURE 2959), 2-hydroxy-2-methyl-1-phenyl-1-propanone (HMPP), α-dimethoxy-α-phenylacetophenone (DMPA), 1-hydroxycyclohexyl phenyl ketone (HCPK) or other compounds with benzene. However, the present disclosure is not limited to the aforementioned compounds.

According to the polymer of the present disclosure, the average molecular weight of the polymer is a number average molecular weight of the overall polymer molecule as tested, and the formula is as follows:

$$\text{Number average molecular weight} = (\Sigma\ \text{molecular weight}) / \text{number of molecules.}$$

According to the polymer of the present disclosure, the pyrolysis temperature of the polymer is a temperature of the polymer starting to pyrolysis.

According to the polymer of the present disclosure, the viscosity of the polymer is a viscous degree of the polymer, which means the fluidity of the polymer.

According to the polymer of the present disclosure, the water solubility of the polymer is a solubility of the polymer when the water is taken as the solvent. During the test, a minimum amount of the polymer is slowly added into the water as the solute, and the test stops when the polymer cannot be dissolved.

According to the polymer of the present disclosure, the absorbance and the transmittance of the polymer are tested by a spectrophotometer to measure an absorbance every 20 nm in the wavelength range of 200 nm to 1000 nm to obtain the absorbance (O.D.) thereof. One side of the spectrophotometer includes a light source to provide parallel lights of various wavelengths. When the light passes through the sample, a detector at the other side measures the strength of the light. The absorbance can be obtained after comparing the strength of light before and after passing through the sample. The relationship between the absorbance and transmittance is as follows:

$$\text{Absorbance} = -\log_{10}(\text{transmittance}).$$

Because the polymer is in a liquid state during the test, the extremely weak reflectance can be ignored. The sum of absorption ratio and transmittance is 100%, and the absorption ratio and the transmittance can be derived from the absorbance. When testing the absorbance, the concentration of the polymer is 0.25% (weight percentage), and the solvent for dilution is deionized water. The light at some wavelengths will almost completely pass through the polymer, resulting in an error of negative absorbance. In this case, the absorbance is regarded as 0 and the transmittance is regarded as 100%.

According to the polymer of the present disclosure, the biodegradability of the polymer means the polymer can be gradually degraded by microorganisms in specific environments.

According to the polymer of the present disclosure, the marine environment means to soak the sample in a degradation solution which simulates the seawater. Specifically, the sample and the degradation solution are placed in a degradation tank with a weight ratio of 1:6, and the degradation tank is placed under 25 ± 2°C and observed for 180

days. The composition and steps of preparing the degradation solution are as follows:

I. Stock solution for mineral medium:

Solution (a): dissolve 8.50 g of $KH_2PO_4$, 21.75 g of $K_2HPO_4$, 33.40 g of $Na_2HPO_4$ and 0.50 g of $NH_4Cl$ in deionized water into a total volume of 1 L, and adjust the pH value to 7.4.
Solution (b): dissolve 27.50 g of $CaCl_2$ or 36.40 g of $CaCl_2 \cdot 2H_2O$ in deionized water into a total volume of 1 L.
Solution (c): dissolve 22.50 g of $MgSO_4 \cdot 7H_2O$ in deionized water into a total volume of 1 L.
Solution (d): dissolve 0.25 g of $FeCl_3 \cdot 6H_2O$ in deionized water into a total volume of 1 L. A drop of concentrated sulfuric acid or 0.4 g of ethylenediaminetetraacetic acid (EDTA) can be added to the solution for preservation.

II. Mineral medium: add 10 mL of solution (a) into 800 mL of deionized water, add 1 mL of solution (b), solution (c) and solution (d) sequentially, and add deionized water to a total volume of 1 L.
III. Preprocessing of compost - preparation of degradation solution:

Remove large clumps in a compost used in ASTM-D5338, and wash the compost with the medium. Centrifuge (1100 g, 10 min) the washed mixture and remove the supernatant, and the process is repeated for 3 times to 5 times. Dry the product in an oven of 70°C. Before use, the dried product is dissolved by the medium to 3 g/L to 5 g/L and stirred for 2 minutes, and then resting for 20 minutes to make particles precipitate. The supernatant after resting is mixed with the medium to make the degradation solution with the concentration of 10 mL/L, and the pH value thereof is adjusted into 7.4 $\pm$ 0.2.
In the experiment, the fresh 0.1 M KOH aqueous solution is prepared and distributed to PP bottles of 50 mL. The PP bottles are placed into the degradation tank, and the degradation tank is incubated at the bottom of an airtight box of room temperature (25 $\pm$ 2°C) with the size of 88.4 cm (length) $\times$ 70.2 cm (width) $\times$ 76.4 cm (height). The released $CO_2$ during the degradation of the sample is absorbed by the KOH aqueous solution. The KOH aqueous solution is replaced at a frequency of 6 times/week at the beginning of the experiment (the 1st day to the 30th day), and the frequency turns into 2 times/week after one month until the 180th day. Also, the overall experimental time can be greater than 180 days.
The value of the collected KOH aqueous solution is measured by a pH meter and compared with the control group (0.1 M KOH aqueous solution placed in the constant temperate box without a degradation reaction), and then converted into the hydrogen ion concentration. The weight of $CO_2$ is calculated from the hydrogen ion concentration to estimate the degradation ratio. The aforementioned conversion formulas are as follows:

(1) Hydroxyl concentration change = hydroxyl concentration in the control group - hydroxyl concentration in the experimental group = hydrogen ion concentration;
(2) Carbon dioxide weight (unit: mg) change = hydrogen ion concentration $\times$ 44 / 2 $\times$ 50 mL, wherein 44 is the molecular weight of carbon dioxide, 2 is the equilibrium coefficient of carbon dioxide reaction, and 50 mL is the volume of aqueous solution; and
(3) Inorganization (degradation) percentage = carbon dioxide weight change / theoretical amount of carbon dioxide from the complete degradation of the sample $\times$ 100%.

According to the polymer of the present disclosure, the illuminated environment and the dark environment are environments with or without light exposure. The lamps used for light exposure are TL-K 40W/10-R SLV from Centenary Company and TL 20W/52 SLV/25 from Philips Company. One of each kind of the lamps is placed on the top-inside surface of the airtight box, and the light wavelength thereof is about 350 nm to 500 nm.
According to the polymer of the present disclosure, the soil environment is an environment for the test under a standard testing method of ASTM-D5338, and the degradation ratio under the soil environment is an experimental result based on the method of ASTM-D5338. The percentage of degradation is calculated by a unit of weight. Specifically, the sample and the activated sludge (compost) are mixed with each other in a weight ratio of 1:6, and the water content in the degradation tank is maintained at about 50% by adding perlite. The degradation tank is placed under 58 $\pm$ 2°C and observed for 180 days. The main components of the compost include livestock manure, soybean powder, bagasse, wood dust, wheat bran and waste mushroom grow bag. The components of the perlite are shown in Table 1 below:

Table 1

| Substance | $SiO_2$ | $Al_2O_3$ | $Fe_2O_3$ | CaO | $K_2O$ | $Na_2O$ | MgO | $H_2O$ |
|---|---|---|---|---|---|---|---|---|
| Content (%) | 68 - 74 | 0 - 12 | 0.5 - 3.6 | 0.7 - 1.0 | 2 - 3 | 4 - 5 | 0.3 | 2.3 - 6.4 |

In the experiment, the fresh 0.1 M KOH aqueous solution is prepared and distributed to PP bottles of 50 mL. The PP bottles are placed into the degradation tank, and the degradation tank is incubated in a constant temperate box (58 ± 2°C). The released $CO_2$ during the degradation of the sample is absorbed by the KOH aqueous solution. The KOH aqueous solution is replaced at a frequency of 6 times/week at the beginning of the experiment (the 1st day to the 30th day), and the frequency turns into 2 times/week after one month until the 180th day. Also, the overall experimental time can be greater than 180 days.

The value of the collected KOH aqueous solution is measured by a pH meter and compared with the control group (0.1 M KOH aqueous solution placed in the constant temperate box without a degradation reaction), and then converted into the hydrogen ion concentration. The weight of $CO_2$ is calculated from the hydrogen ion concentration to estimate the degradation ratio. The aforementioned conversion formulas are as follows:

(1) Hydroxyl concentration change = hydroxyl concentration in the control group - hydroxyl concentration in the experimental group = hydrogen ion concentration;
(2) Carbon dioxide weight (unit: mg) change = hydrogen ion concentration × 44 / 2 × 50 mL, wherein 44 is the molecular weight of carbon dioxide, 2 is the equilibrium coefficient of carbon dioxide reaction, and 50 mL is the volume of aqueous solution; and
(3) Inorganization (degradation) percentage = carbon dioxide weight change / theoretical amount of carbon dioxide from the complete degradation of the sample × 100%.

According to the polymer of the present disclosure, the degradation ratio on the n-th day of the polymer is the degradation ratio on the n-th day of the polymer under the soil environment, the degradation ratio on the n-th day of the polymer under the dark marine environment or the degradation ratio on the n-th day of the polymer under the illuminated marine environment. The n-th day can be the 7th day, the 8th day, the 9th day, the 10th day, the 14th day, the 21st day, the 24th day, the 25th day, the 26th day, the 28th day, the 29th day, the 30th day, the 31st day, the 35th day, the 42nd day, the 49th day, the 52nd day, the 56th day, the 59th day, the 63rd day, the 66th day, the 70th day, the 73rd day, the 77th day, the 80th day, the 84th day, the 87th day, the 91st day, the 94th day, the 98th day, the 101st day, the 105th day, the 140th day, the 150th day, the 154th day, the 157th day, the 175th day, the 178th day or the 180th day, or can be the degradation ratio on any day from the 1st day to the 180th day. For example, the aforementioned Dr28 is the degradation ratio on the 28th day of the polymer under the soil environment, and it can be defined according to the foregoing principle. Dr21 represents the degradation ratio on the 21st day of the polymer under the soil environment, Drs14 represents the degradation ratio on the 14th day of the polymer under the dark marine environment, Drus42 represents the degradation ratio on the 42nd day of the polymer under the illuminated marine environment, and so on. However, the present disclosure is not limited to the aforementioned examples.

According to the polymer of the present disclosure, the polymer can be used in adhesive materials, repairing materials, coating materials, packaging materials or encapsulating materials, and the present disclosure is not limited thereto.

According to the coating material of the present disclosure, the coating material includes the polymer of the aforementioned aspect. The coating material can include adhesives, paste, glue, light-curing glue, oxidizing glue. The coating material can be viscous, or it can be hardened after exposure to light to form a film. Also, materials, elements or objects which are in contact with the coating material can be bonded by exposed to light. The coating material can be used in electronic products, packaging, clothing, containers and various assembled products, and the present disclosure is not limited thereto.

According to the assembled product of the present disclosure, the assembled product includes the coating material of the aforementioned aspect. The assembled product is a product whose elements need to be assembled, such as mobile phones, smart bracelets, watches, cameras, notebook computers, desktop computers, screens, mice, keyboards, home appliances, chairs, tables, batteries, bicycles, motorcycles, cars, containers, tableware, clothing and packaging, and the present disclosure is not limited thereto.

According to the above description of the present disclosure, the following specific examples are provided for further explanation.

<1st Example>

A monomer of a polymer of the 1st example includes a benzene derivative, a lactide and a caprolactone, wherein the benzene derivative of the 1st example is 2-hydroxy-4'-(2-hydroxyethoxy)-2-methylpropiophenone.

In the polymer of the 1st example, when an average molecular weight of the polymer is Mw, a pyrolysis temperature of the polymer is Pt, a viscosity of the polymer is Vi, and a water solubility of the polymer is Sw, the following conditions are satisfied: Mw = 3700 g/mole; Pt = 246°C; Vi = 6.547 Pa·s; and Sw = 0.38%.

In the polymer of the 1st example, when a wavelength of the polymer having the largest absorbance is WAmax,

an average transmittance of the polymer under a wavelength range of 400 nm to 700 nm is T4070, and an average transmittance of the polymer under a wavelength range of 700 nm to 1000 nm is T70100, the following conditions are satisfied: WAmax = 280 nm; T4070 = 100.00%; and T70100 = 99.50%.

In the polymer of the 1st example, when a degradation ratio on the 28th day of the polymer under a dark marine environment is Drs28, and a degradation ratio on the 28th day of the polymer under an illuminated marine environment is Drus28, the following conditions are satisfied: Drs28 = 13%; Drus28 = 16%; and Drus28-Drs28 = 3%.

In the polymer of the 1st example, when a degradation ratio on the 178th day of the polymer under the dark marine environment is Drs178, and a degradation ratio on the 178th day of the polymer under the illuminated marine environment is Drus178, the following conditions are satisfied: Drs178 = 31%; Drus178 = 64%; and Drus178-Drs178 = 33%.

In the polymer of the 1st example, when a degradation ratio on the 28th day of the polymer under a soil environment is Dr28, a degradation ratio on the 35th day of the polymer under the soil environment is Dr35, a degradation ratio on the 56th day of the polymer under the soil environment is Dr56, and a time of the polymer reaching a degradation ratio of 50% under the soil environment is TDr50p, the following conditions are satisfied: Dr28 = 100%; Dr35 = 99%; Dr56 = 98%; and TDr50p = 3 days.

The chemical structure and properties of the polymer of the 1st example are listed in Table 2 below.

<2nd Example>

A monomer of a polymer of the 2nd example includes a benzene derivative, a lactide and a caprolactone, wherein the benzene derivative of the 2nd example is 2-hydroxy-4'-(2-hydroxyethoxy)-2-methylpropiophenone.

The chemical structure and properties of the polymer of the 2nd example are listed in Table 2 below. Also, the definitions of these parameters shown in Table 2 are the same as those stated in the 1st example with corresponding values for the 2nd example, so an explanation in this regard will not be provided again.

<3rd Example>

A monomer of a polymer of the 3rd example includes a benzene derivative, a lactide and a caprolactone, wherein the benzene derivative of the 3rd example is 2-hydroxy-4'-(2-hydroxyethoxy)-2-methylpropiophenone.

The chemical structure and properties of the polymer of the 3rd example are listed in Table 2 below. Also, the definitions of these parameters shown in Table 2 are the same as those stated in the 1st example with corresponding values for the 3rd example, so an explanation in this regard will not be provided again.

Table 2

| | 1st Example | 2nd Example | 3rd Example |
|---|---|---|---|
| Monomer Component | 2-hydroxy-4'-(2-hydroxyethoxy)-2-methylpropiophenone | | |
| | lactide | | |
| | caprolactone | | |
| Catalyst | Tin(II) 2-ethylhexanoate ($Sn(Oct)_2$) | | |
| Structure | 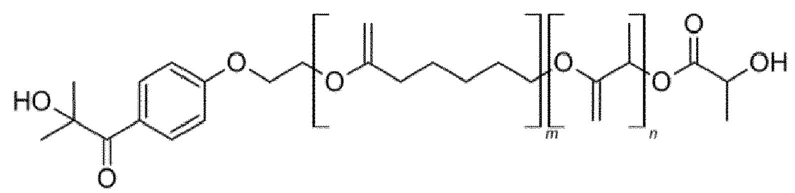 | | |
| Mw (g/mole) | 3700 | 2300 | - |
| Pt (°C) | 246 | 220 | - |
| Vi (Pa·s) | 6.547 | 26.691 | - |
| Sw (%) | 0.38 | 0.32 | - |
| WAmax (nm) | 280 | 260 | - |
| T4070 (%) | 100.00 | 100.00 | - |

(continued)

| Table 2 | | | |
|---|---|---|---|
| | 1st Example | 2nd Example | 3rd Example |
| T70100 (%) | 99.50 | 99.93 | - |
| Drs28 (%) | 13 | 4 | - |
| Drus28 (%) | 16 | 9 | - |
| Drus28-Drs28 (%) | 3 | 5 | - |
| Drs178 (%) | 31 | 46 | - |
| Drus178 (%) | 64 | 63 | - |
| Drus178-Drs178 (%) | 33 | 17 | - |
| Dr28 (%) | 100 | 72 | 78 |
| Dr35 (%) | 99 | 72 | 81 |
| Dr56 (%) | 98 | 72 | 86 |
| TDr50p (days) | 3 | 7 | 17 |

Please refer to Fig. 1 and Fig. 2. Fig. 1 is a relationship diagram between wavelength and absorbance of the polymers of the 1st example and the 2nd example according to the present disclosure. Fig. 2 is a relationship diagram between wavelength and transmittance of the polymers of the 1st example and the 2nd example according to the present disclosure. In the present disclosure, the absorbance and transmittance of the polymers of the 1st example and the 2nd example under different wavelengths of light are measured, and the results are shown in Table 3 below.

| Table 3 | | | | |
|---|---|---|---|---|
| | 1st Example | | 2nd Example | |
| Wavelength (nm) | Absorbance (O.D.) | Transmittance (%) | Absorbance (O.D.) | Transmittance (%) |
| 200 | 0.4840 | 32.81 | 0.4980 | 31.77 |
| 220 | 1.3543 | 4.42 | 1.3933 | 4.04 |
| 240 | 2.5293 | 0.30 | 2.7613 | 0.17 |
| 260 | 3.2903 | 0.05 | 3.7313 | 0.02 |
| 280 | 3.4243 | 0.04 | 3.5700 | 0.03 |
| 300 | 1.1547 | 7.00 | 2.4523 | 0.35 |
| 320 | 0.1807 | 65.97 | 0.3500 | 44.67 |
| 340 | 0.0673 | 85.64 | 0.1397 | 72.50 |
| 360 | 0.0167 | 96.24 | 0.0170 | 96.16 |
| 380 | 0.0017 | 99.62 | 0 | 100.00 |
| 400 | 0 | 100.00 | 0 | 100.00 |
| 420 | 0 | 100.00 | 0 | 100.00 |
| 440 | 0 | 100.00 | 0 | 100.00 |
| 460 | 0 | 100.00 | 0 | 100.00 |
| 480 | 0 | 100.00 | 0 | 100.00 |
| 500 | 0 | 100.00 | 0 | 100.00 |
| 520 | 0 | 100.00 | 0 | 100.00 |
| 540 | 0 | 100.00 | 0 | 100.00 |

(continued)

| Table 3 | | | | |
|---|---|---|---|---|
| | 1st Example | | 2nd Example | |
| Wavelength (nm) | Absorbance (O.D.) | Transmittance (%) | Absorbance (O.D.) | Transmittance (%) |
| 560 | 0 | 100.00 | 0 | 100.00 |
| 580 | 0 | 100.00 | 0 | 100.00 |
| 600 | 0 | 100.00 | 0 | 100.00 |
| 620 | 0 | 100.00 | 0 | 100.00 |
| 640 | 0 | 100.00 | 0 | 100.00 |
| 660 | 0 | 100.00 | 0 | 100.00 |
| 680 | 0 | 100.00 | 0 | 100.00 |
| 700 | 0 | 100.00 | 0 | 100.00 |
| 720 | 0.0003 | 99.92 | 0 | 100.00 |
| 740 | 0.0010 | 99.77 | 0 | 100.00 |
| 760 | 0.0013 | 99.69 | 0 | 100.00 |
| 780 | 0.0003 | 99.92 | 0 | 100.00 |
| 800 | 0.0013 | 99.69 | 0 | 100.00 |
| 820 | 0.0013 | 99.69 | 0 | 100.00 |
| 840 | 0.0010 | 99.77 | 0 | 100.00 |
| 860 | 0.0010 | 99.77 | 0 | 100.00 |
| 880 | 0.0020 | 99.54 | 0 | 100.00 |
| 900 | 0.0053 | 98.78 | 0.0003 | 99.92 |
| 920 | 0.0070 | 98.40 | 0.0027 | 99.39 |
| 940 | 0.0030 | 99.31 | 0 | 100.00 |
| 960 | 0.0040 | 99.08 | 0 | 100.00 |
| 980 | 0.0060 | 98.63 | 0.0020 | 99.54 |
| 1000 | 0 | 100.00 | 0 | 100.00 |

In Table 3, Fig. 1 and Fig. 2, the wavelength of the polymer of the present disclosure having the largest absorbance can be smaller than 300 nm. It can prevent the polymer from being consumed by a chemical reaction caused by exposure to natural light, which is favorable for improving the durability of the polymer. Moreover, the average transmittance of the polymer of the present disclosure under the wavelength range of 400 nm to 700 nm can be larger than 70.00%. It can avoid the polymer affecting the light transmittance, which is favorable for increasing the applications of the polymer.

Please refer to Fig. 3 and Fig. 4. Fig. 3 is a diagram showing the change of degradation ratios of the polymer of the 1st example under the illuminated marine environment and the dark marine environment according to the present disclosure. Fig. 4 is a diagram showing the change of degradation ratios of the polymer of the 2nd example under the illuminated marine environment and the dark marine environment according to the present disclosure. In the present disclosure, the degradation ratios of the polymers of the 1st example and the 2nd example under the illuminated marine environment and the dark marine environment are measured. In the illuminated marine environment, the polymers are exposed to light including ultraviolet (UV) light. In the dark marine environment, the polymers are not exposed to UV light. The results are shown in Table 4 below.

| Table 4 | | | | |
|---|---|---|---|---|
| | 1st Example | | 2nd Example | |
| Days | Dark Marine Environment (%) | Illuminated Marine Environment (%) | Dark Marine Environment (%) | Illuminated Marine Environment (%) |
| 0 | 0 | 0 | 0 | 0 |
| 7 | 3 | 4 | 4 | 4 |
| 8 | 4 | 4 | 4 | 4 |
| 10 | 6 | 6 | 5 | 6 |
| 14 | 7 | 8 | 5 | 8 |
| 21 | 10 | 13 | 5 | 8 |
| 28 | 13 | 16 | 4 | 9 |
| 34 | 14 | 18 | 4 | 12 |
| 41 | 16 | 21 | 6 | 15 |
| 48 | 16 | 23 | 8 | 17 |
| 55 | 18 | 24 | 12 | 19 |
| 62 | 20 | 28 | 18 | 23 |
| 69 | 22 | 32 | 24 | 27 |
| 76 | 24 | 35 | 29 | 30 |
| 83 | 25 | 38 | 32 | 33 |
| 90 | 25 | 40 | 34 | 37 |
| 97 | 27 | 43 | 36 | 40 |
| 104 | 28 | 47 | 38 | 44 |
| 111 | 29 | 48 | 38 | 46 |
| 118 | 29 | 50 | 38 | 48 |
| 125 | 29 | 52 | 39 | 49 |
| 132 | 31 | 53 | 40 | 51 |
| 139 | 30 | 55 | 40 | 53 |
| 146 | 30 | 56 | 41 | 55 |
| 153 | 30 | 58 | 43 | 57 |
| 160 | 31 | 60 | 44 | 58 |
| 167 | 31 | 62 | 45 | 60 |
| 174 | 30 | 64 | 45 | 62 |
| 178 | 31 | 64 | 46 | 63 |

In Table 4, Fig. 3 and Fig. 4, the difference between the degradation ratios under the illuminated marine environment and the dark marine environment on the 28th day of the polymer of the present disclosure can be larger than 1%, and the difference between the degradation ratios on the 178th day can be larger than 5%. It is favorable for enhancing the synergy between the illumination and the degradation of the polymer, and also enhancing the upper limit of the synergy.

Please refer to Fig. 5. Fig. 5 is a diagram showing the change of biodegradation ratios of the polymers of the 1st example to the 3rd example under the soil environment according to the present disclosure. In the present disclosure, the degradation ratios of the polymers of the 1st example to the 3rd example under the soil environment are measured, and the results are shown in Table 5 below.

| Table 5 | | | |
|---|---|---|---|
| | 1st Example | 2nd Example | 3rd Example |
| Days | Degradation Ratio (%) | | |
| 0 | 0 | 0 | 0 |
| 3 | 54 | 34 | 15 |
| 7 | 90 | 63 | 29 |
| 17 | 99 | 72 | 53 |
| 21 | 100 | 73 | 66 |
| 28 | 100 | 72 | 78 |
| 35 | 99 | 72 | 81 |
| 42 | 100 | 72 | 83 |
| 49 | 99 | 71 | 84 |
| 56 | 98 | 72 | 86 |
| 64 | 96 | 68 | 87 |
| 71 | 95 | 67 | 87 |
| 78 | 94 | 66 | 88 |
| 85 | 93 | 65 | 88 |
| 92 | 92 | 64 | 88 |
| 99 | 92 | 64 | 89 |
| 106 | 91 | 63 | 89 |
| 113 | 90 | 61 | 89 |
| 120 | 92 | 66 | 89 |
| 127 | 91 | 66 | 89 |
| 134 | 91 | 66 | 89 |
| 141 | 91 | 66 | 89 |
| 148 | 91 | 66 | 89 |
| 155 | 91 | 66 | 90 |
| 158 | 91 | 66 | 90 |

In Table 5 and Fig. 5, the degradation ratio on the 28th day of the polymer of the present disclosure under the soil environment can be larger than 50%, which is favorable for enhancing the degradation effects of the polymer under the soil environment. Moreover, the time of the polymer of the present disclosure reaching the degradation ratio of 50% under the soil environment can be less than 28 days, which is favorable for enhancing the degradation efficiency of the polymer under the soil environment.

## Claims

**1.** A polymer having a degradability, a monomer of the polymer **characterized in** comprising a benzene derivative, a lactide and a caprolactone;

wherein a ratio of the benzene derivative in the polymer is smaller than a ratio of the lactide in the polymer, and the ratio of the benzene derivative in the polymer is smaller than a ratio of the caprolactone in the polymer;
wherein a degradation ratio on a 28th day of the polymer under an illuminated marine environment is Drus28,

and the following condition is satisfied:

$$13\% \leq Drus28.$$

2. The polymer of claim 1, wherein the benzene derivative has a light-absorbability.

3. The polymer of claim 1 or claim 2, wherein the benzene derivative comprises at least one of a hydroxyl group, a carbonyl group and an ether group.

4. The polymer of any one of claims 1-3, wherein an average molecular weight of the polymer is Mw, and the following condition is satisfied:

$$300\ g/mole \leq Mw.$$

5. The polymer of any one of claims 1-4, wherein an average molecular weight of the polymer is Mw, and the following condition is satisfied:

$$Mw \leq 10000\ g/mole.$$

6. The polymer of any one of claims 1-5, wherein a pyrolysis temperature of the polymer is Pt, and the following condition is satisfied:

$$100°C \leq Pt.$$

7. The polymer of any one of claims 1-6, wherein a viscosity of the polymer is Vi, and the following condition is satisfied:

$$Vi \leq 500\ Pa \cdot s.$$

8. The polymer of any one of claims 1-7, wherein a water solubility of the polymer is Sw, and the following condition is satisfied:

$$Sw \leq 5.00\%.$$

9. The polymer of any one of claims 1-8, wherein the degradation ratio on the 28th day of the polymer under the illuminated marine environment is Drus28, a degradation ratio on a 28th day of the polymer under a dark marine environment is Drs28, and the following condition is satisfied:

$$1\% \leq Drus28-Drs28.$$

10. The polymer of any one of claims 1-9, wherein a degradation ratio on a 178th day of the polymer under the illuminated marine environment is Drus178, a degradation ratio on a 178th day of the polymer under the dark marine environment is Drs178, and the following condition is satisfied:

$$5\% \leq Drus178-Drs178.$$

11. The polymer of any one of claims 1-10, wherein the polymer has a biodegradability, a degradation ratio on a 28th day of the polymer under a soil environment is Dr28, and the following condition is satisfied:

$$50\% \leq Dr28.$$

**12.** The polymer of any one of claims 1-11, wherein the polymer has a biodegradability, a time of the polymer reaching a degradation ratio of 50% under a soil environment is TDr50p, and the following condition is satisfied:

$$TDr50p \leq 28 \text{ days}.$$

**13.** A coating material, **characterized in** comprising:
the polymer of any one of claims 1-12.

**14.** An assembled product, **characterized in** comprising:
the coating material of claim 13.

**15.** A polymer having a degradability, a monomer of the polymer **characterized in** comprising a benzene derivative, a lactide and a caprolactone;

wherein the benzene derivative comprises at least one of a hydroxyl group, a carbonyl group and an ether group;
wherein a wavelength of the polymer having a largest absorbance is WAmax, and the following condition is satisfied:

$$WAmax \leq 300 \text{ nm}.$$

**16.** The polymer of claim 15, wherein the benzene derivative has a light-absorbability.

**17.** The polymer of claim 15 or claim 16, wherein an average molecular weight of the polymer is Mw, and the following condition is satisfied:

$$300 \text{ g/mole} \leq Mw \leq 10000 \text{ g/mole}.$$

**18.** The polymer of any one of claims 15-17, wherein a water solubility of the polymer is Sw, and the following condition is satisfied:

$$Sw \leq 5.00\%.$$

**19.** The polymer of any one of claims 15-18, wherein an average transmittance of the polymer under a wavelength range of 400 nm to 700 nm is T4070, and the following condition is satisfied:

$$70.00\% \leq T4070.$$

**20.** The polymer of any one of claims 15-19, wherein the polymer has a biodegradability, a degradation ratio on a 28th day of the polymer under a soil environment is Dr28, and the following condition is satisfied:

$$50\% \leq Dr28.$$

**21.** The polymer of any one of claims 15-20, wherein the polymer has a biodegradability, a time of the polymer reaching a degradation ratio of 50% under a soil environment is TDr50p, and the following condition is satisfied:

$$TDr50p \leq 28 \text{ days}.$$

**22.** A coating material, **characterized in** comprising:
the polymer of any one of claims 15-21.

**23.** An assembled product, **characterized in** comprising:

the coating material of claim 22.

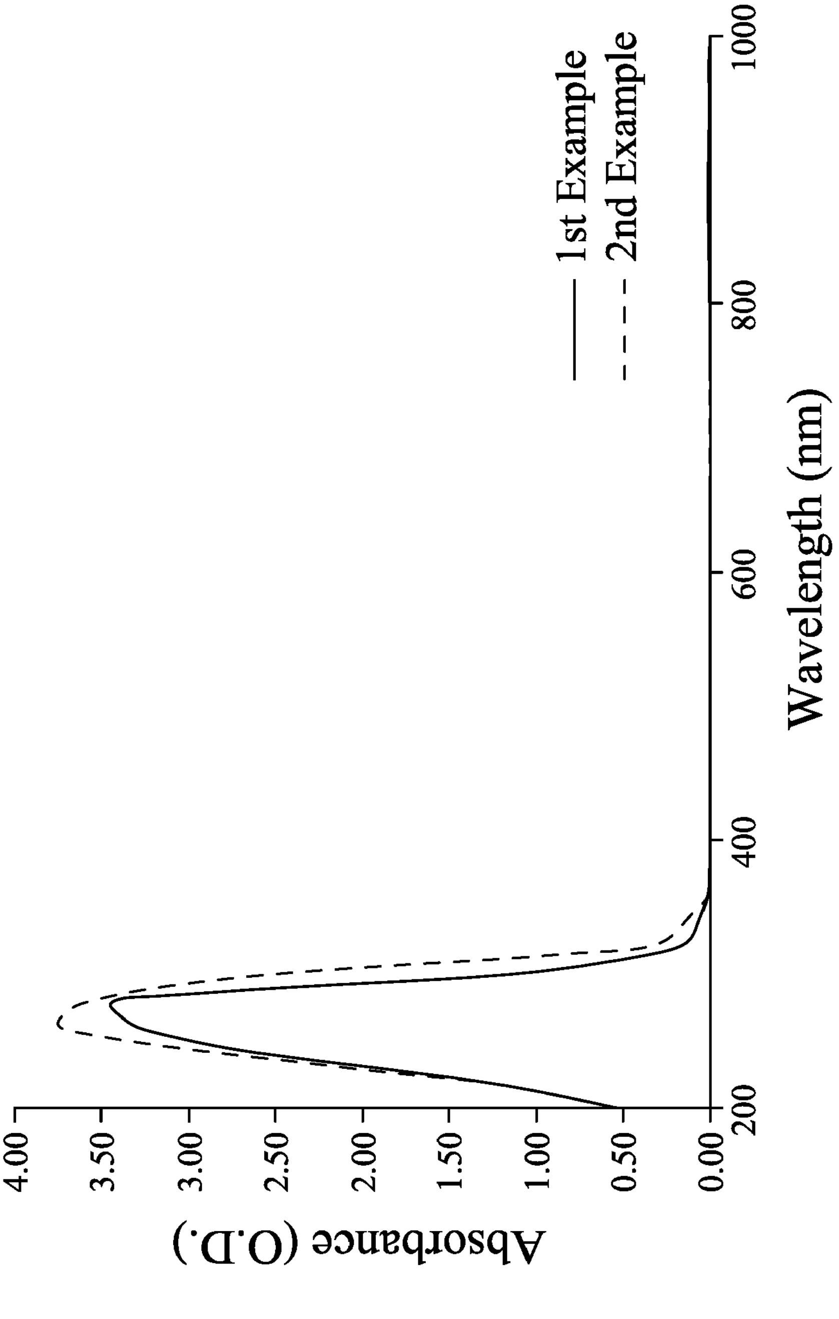
Absorbance (O.D.)
4.00
3.50
3.00
2.50
2.00
1.50
1.00
0.50
0.00
200
400
600
800
1000
Wavelength (nm)
1st Example
2nd Example

Fig. 1

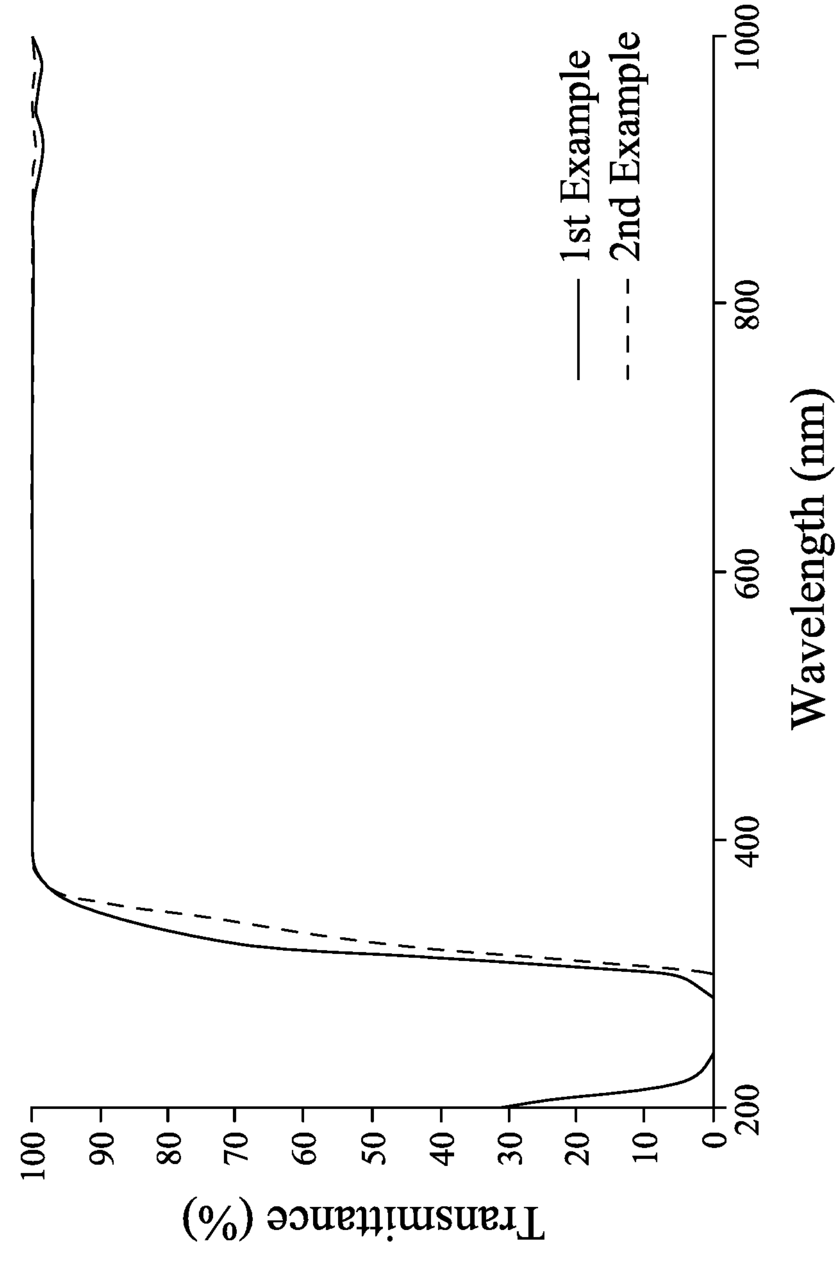
Transmittance (%)
100
90
80
70
60
50
40
30
20
10
0
200
400
600
800
1000
Wavelength (nm)
1st Example
2nd Example

Fig. 2

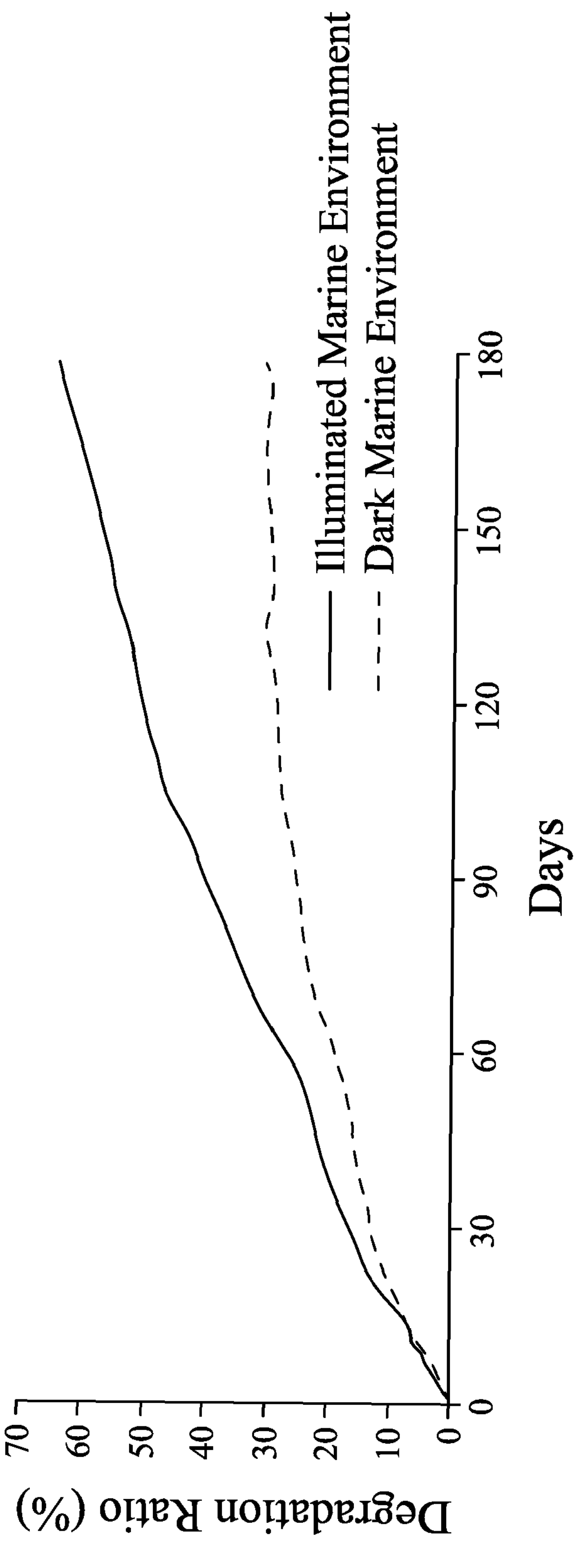
Illuminated Marine Environment
Dark Marine Environment
Degradation Ratio (%)
0
10
20
30
40
50
60
70
Days
0
30
60
90
120
150
180

Fig. 3

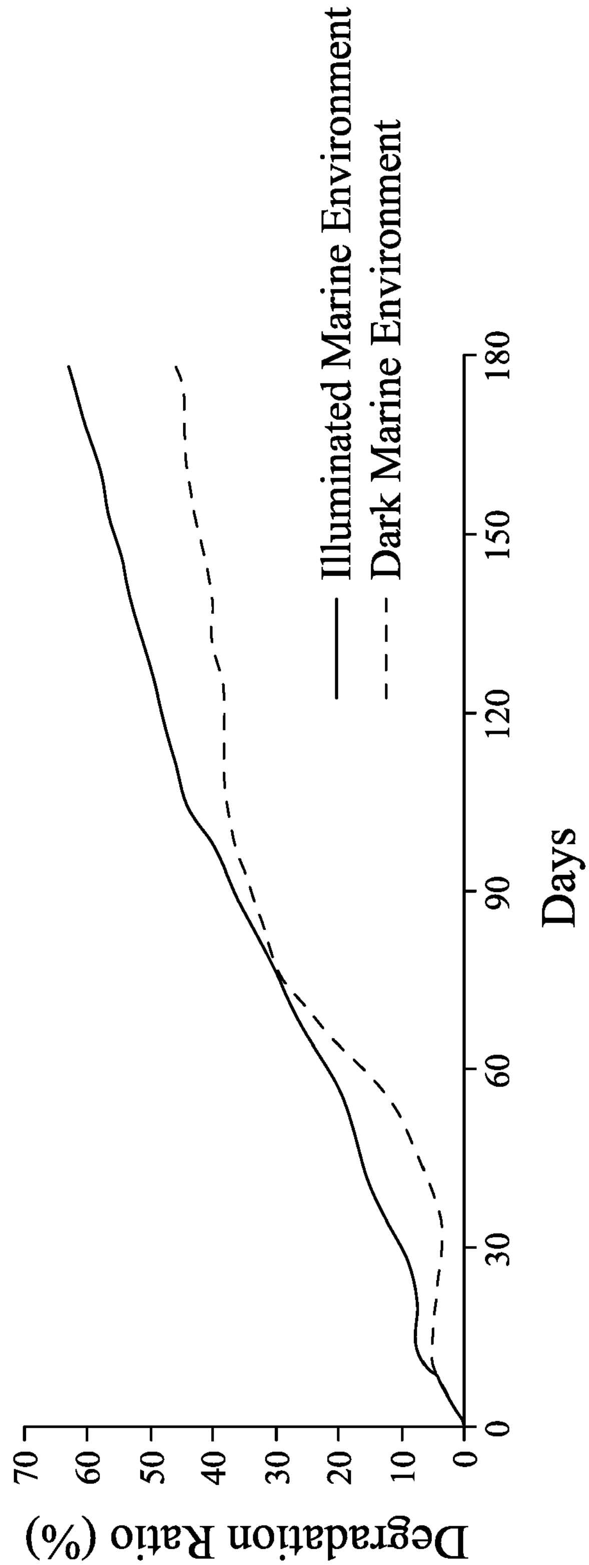
Degradation Ratio (%)
70
60
50
40
30
20
10
0
0
30
60
90
120
150
180
Days
Illuminated Marine Environment
Dark Marine Environment

Fig. 4

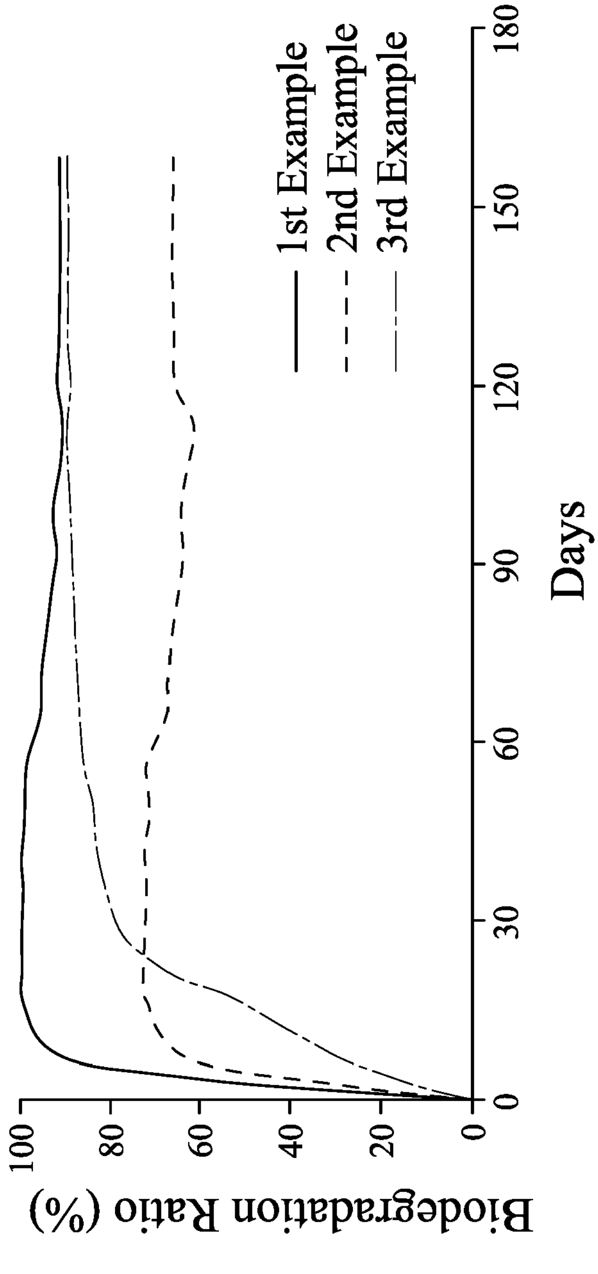
Biodegradation Ratio (%)
100
80
60
40
20
0
0
30
60
90
120
150
180
Days
1st Example
2nd Example
3rd Example

Fig. 5